(19) Europäisches Patentamt

European Patent Office

Office européen des brevets

(11) EP 0 978 477 A1

(12) EUROPEAN PATENT APPLICATION
published in accordance with Art. 158(3) EPC

(43) Date of publication:
09.02.2000 Bulletin 2000/06

(51) Int. Cl.$^7$: C01B 13/02, B01D 53/04

(21) Application number: 99903913.4

(86) International application number:
PCT/JP99/00607

(22) Date of filing: 12.02.1999

(87) International publication number:
WO 99/42403 (26.08.1999 Gazette 1999/34)

(84) Designated Contracting States:
DE ES FR GB IT SE

(30) Priority: 18.02.1998 JP 5124798

(71) Applicants:
• Ueno, Shinji
Kumamoto-shi Kumamoto-ken 860-0874 (JP)
• Nagahiro, Taizo
Nakano-ku, Tokyo 165-0025 (JP)

(72) Inventor:
NAGAHIRO, Taizo,
Dai7sakae Building
Nakano-ku, Tokyo 165-0025 (JP)

(74) Representative:
Prechtel, Jörg, Dipl.-Phys. Dr. et al
Postfach 860 820
81635 München (DE)

(54) METHOD AND APPARATUS FOR CONDENSING OXYGEN GAS

(57) An oxygen gas thickening method and an oxygen gas thickening apparatus configured to prolong a time to feed raw material air into adsorption towers for feeding air even after completing adsorption, thereby lowering a concentration of thickened oxygen gas. The method and apparatus which have the prolonged raw material air feeding time to feed air even after completing the adsorption makes it possible to obtain oxygen gas at a desired high concentration without using a diluting bypass circuit.

FIG. 4

## EP 0 978 477 A1

### Description

Technical field

The present invention relates to an oxygen gas thickening method and an oxygen gas thickening apparatus which utilize pressure swing absorption (PSA) system.

Background Art

Oxygen gas is used as an industrial oxygen source used for producing ozone gas, a medical oxygen source used by patients having low lung functions, and an auxiliary means to aid respiration in a temporal anoxemia condition after an extremely hard sport, long-term work or study or excessive drinking or smoking. Accordingly, there is a strong desire for oxygen supply apparatus.

The PSA system is conventionally known as an apparatus which supplies oxygen and a method which enhances an oxygen concentration in air or thickens oxygen gas.

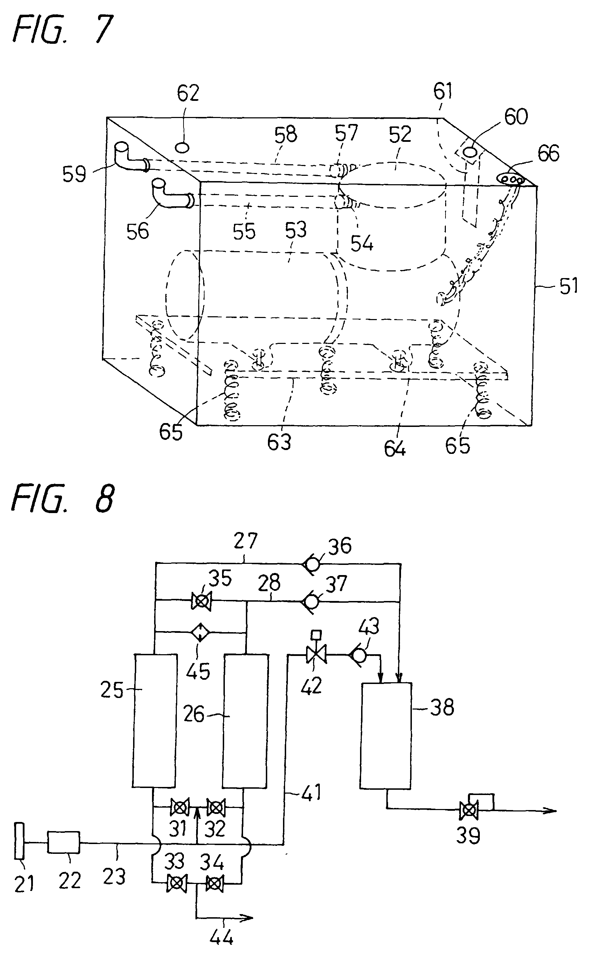

A conventional example of oxygen thickening apparatus which adopts the PSA system has a configuration shown in Fig. 8.

In Fig. 8 which shows the conventional apparatus, a reference numeral 21 represents an air filter, a reference numeral 22 designates a compressor, a reference numeral 23 denotes a raw material feeding path, a reference numeral 25 represents a first adsorption tower and a reference numeral 26 designates a second adsorption tower. An adsorbent such as active carbon or zeolite, for example, is charged in each of the first and second adsorption towers. Reference numerals 27 and 28 denote flow paths for thickened oxygen gas, reference numerals 31, 32, 33, 34 and 35 represent solenoid valves, reference numerals 36 and 37 designate back-flow check valves, a reference numeral 38 denotes a buffer reservoir, a reference numeral 39 represents a pressure regulator valve, a reference numeral 41 designates a bypass circuit for diluting air, a reference numeral 42 denotes a flow control valve, a reference numeral 43 represents a back-flow check valve, a reference numeral 44 designates an exhaust desorbed gas and a reference numeral 45 denotes an orifice for supplying a definite amount of oxygen gas thickened by the adsorption tower which operates for desorption of adsorbed nitrogen gas in a high pressure condition to the other adsorption tower which operates for desorption in a low pressure condition.

The apparatus shown in Fig. 8 feeds raw material air through the air filter 21, compresses the air to a desired pressure with the air compressor 22 and supplies the compressed air into the first adsorption tower 25 or the second adsorption tower 26 by way of the raw material flow path 23. Using the solenoid valves 31, 32, 33 and 34, the apparatus supplies the air alternately to the first adsorption lower and the second adsorption tower for alternate adsorption or desorption and exhausts desorbed gas. Speaking concretely, the apparatus first opens the solenoid valves 31 and 34, and closes the solenoid valves 32 and 33. Accordingly, high-pressure raw material air is supplied into the first adsorption tower 25. On the other hand, the second adsorption tower is set an exhaust condition.

In the adsorption tower 25 into which the high-pressure air is supplied, mainly nitrogen gas in the air is selectively adsorbed by the adsorbent, whereby an oxygen concentration is enhanced in the air, and high-concentration oxygen gas is fed into the buffer reservoir 38 by way of the flow path 27.

Then, an automatic solenoid valve switching device closes the solenoid valves 31 and 34, and opens the solenoid valves 32 and 33.

Accordingly, the compressed high-pressure air from the air compressor 22 is supplied into the second adsorption tower 26, wherein nitrogen gas is adsorbed similarly by the adsorbent and an oxygen gas concentration is enhanced, and high-concentration oxygen gas is fed into the buffer reservoir 38 by way of the flow path 28.

Since the feeding of the high-pressure air into the first adsorption tower 25 is stopped and the exhaust solenoid valve 33 is opened on the other hand, a pressure is lowered in the first adsorption tower 25 and thickened oxygen gas is fed into the first adsorption tower from the second adsorption tower 26 by way of the orifice 45, whereby nitrogen gas which is adsorbed by the adsorbent is desorbed and a desorbed gas containing free nitrogen gas is exhausted outside by way of the open solenoid valve 33 and the flow path 44.

Successively, the solenoid valves 31 and 34 are opened, and the solenoid valves 32 and 33 are closed to feed pressurized air into the first adsorption tower 25, whereby nitrogen gas is adsorbed in the first adsorption tower 25 and desorbed in the second adsorption tower 26.

Since the alternate opening and closing of the solenoid valves 31, 32 and the solenoid valves 32, 33 are repeated as described above, the first and second adsorption towers alternately repeat the adsorption and description, thereby alternately feeding the high-concentration oxygen gas into the buffer reservoir.

Since the high-concentration oxygen gas fed into the buffer reservoir is at a high concentration of approximately 95%, it is diluted to a concentration matched with a purpose of use. Speaking concretely, the flow control valve 42 is opened and the raw material air is supplied into the buffer reservoir by way of the diluting air bypass circuit 41, thereby adjusting the concentration of the high-concentration oxygen gas to a desired concentration. The oxygen gas adjusted to the desired concentration is supplied outside by way of the valve 39 for use.

The conventional oxygen gas thickening method described above allows the adsorption tower to provide oxygen gas at a concentration as high as 95% which is higher than that of oxygen gas to be used to aid respiration, etc. Accordingly, the conventional oxygen gas thickening apparatus described above uses the diluting air bypass circuit which dilutes the high-concentration oxygen gas by supplying air into the buffer reservoir and then supplies oxygen gas for use. The conventional oxygen gas thickening apparatus requires the bypass circuit for a reason described above.

Furthermore, the conventional oxygen gas thickening apparatus uses the first and second adsorption towers which have a cylindrical form (straight pipe form) and are configured to exhaust a described gas abruptly from bottoms of the adsorption towers at desorbing operations. Due to abrupt pressure drops caused by the abrupt exhaust and gravity, the adsorbent is gradually made into fine powder, accumulated in lower portions of the adsorption towers, chokes the filters disposed in the lower portions and gradually increases a pressure loss, thereby making it necessary to exchange the adsorption towers with new ones for maintenance even while the adsorbent in the adsorption towers has a sufficient capability to adsorb nitrogen gas.

Furthermore, the conventional apparatus the compressor to enhance a pressure of supplied raw material air and the compressor makes high noise. Though a noise preventive measure is taken, for example, by bonding a sound-absorbent material to inside walls of the oxygen gas thickening apparatus, the measure it not sufficiently effective.

Disclosure of the Invention

The oxygen gas thickening method according to the present invention is an oxygen gas thickening method which uses a PSA system characterized in that it is configured to supply raw material compressed air into absorption towers for a prolonged time so that the raw material air is supplied even after an adsorbing capability of an adsorbent is saturated, thereby obtaining oxygen gas at a desired concentration without adding air directly to a thickened gas from a raw material supply source using a diluting air bypass circuit.

The method according to the present invention which supplies the raw material air to the absorption towers even after the completion of the adsorption is capable of obtaining high concentration oxygen gas by allowing nitrogen gas to be adsorbed by an adsorbent and diluting the high concentration oxygen gas to a desired concentration without adsorbing nitrogen by supplying the raw material air even after completing adsorption so that it is added through a circuit which is the same as a high concentration gas supply path. Furthermore, the method according to the present invention is capable of setting a cycle time for supplying the raw material air to each of the adsorption towers, thereby determining relatively accurately a concentration of oxygen gas to be obtained.

The oxygen gas thickening apparatus according to the present invention adopts the PSA system and U-shaped absorption towers having raw material air feeding ports, desorbed gas exhaust ports and thickened oxygen gas exhaust ports which are disposed at high locations.

Accordingly, the oxygen gas thickening apparatus according to the present invention allows an adsorbent which are gradually made into fine powder during use of the oxygen gas thickening apparatus to be collected by gravity to bottoms of the U-shaped absorption towers, thereby preventing filters disposed at high locations from being choked at an early stage and having a service life which is much longer than the conventional oxygen gas thickening apparatus which uses the straight pipe type adsorption towers.

Furthermore, the oxygen gas thickening apparatus according to the present invention is characterized in that an air compressor which compresses and supplies raw material is accommodated in a closed box and suspended with an elastic member. Accordingly, the oxygen gas thickening apparatus according to the present invention reduces vibrations of the compressor and prevents noise during operation of the compressor. Moreover, the oxygen gas thickening apparatus according to the present invention is configured to blow exhausted desorbed gas into the closed box accommodating the air compressor, thereby cooling an interior of the closed box and prevent temperature from being extremely raised in the closed box.

Brief Description of the Drawings

Fig. 1 is a diagram showing a configuration of the method according to the present invention;
Fig. 2 is a diagram showing time cycles of the method according to the present invention;
Fig. 3 is a diagram showing relationship between a raw material air feeding time and a concentration of oxygen gas;
Fig. 4 is a diagram showing a configuration of the apparatus according to the present invention;
Fig. 5 is a diagram comparative of a straight pipe type adsorption tower with a U-shaped adsorption tower;
Fig. 6 is a diagram showing an example of U-shaped adsorption tower having a semicircular sectional shape;

Fig. 7 is a diagram showing an accommodated condition of a compressor in a closed box which is used by the present invention; and

Fig. 8 is a diagram showing a configuration of a conventional oxygen gas thickening method using a PSA system.

Best Mode for Embodying the Present Invention

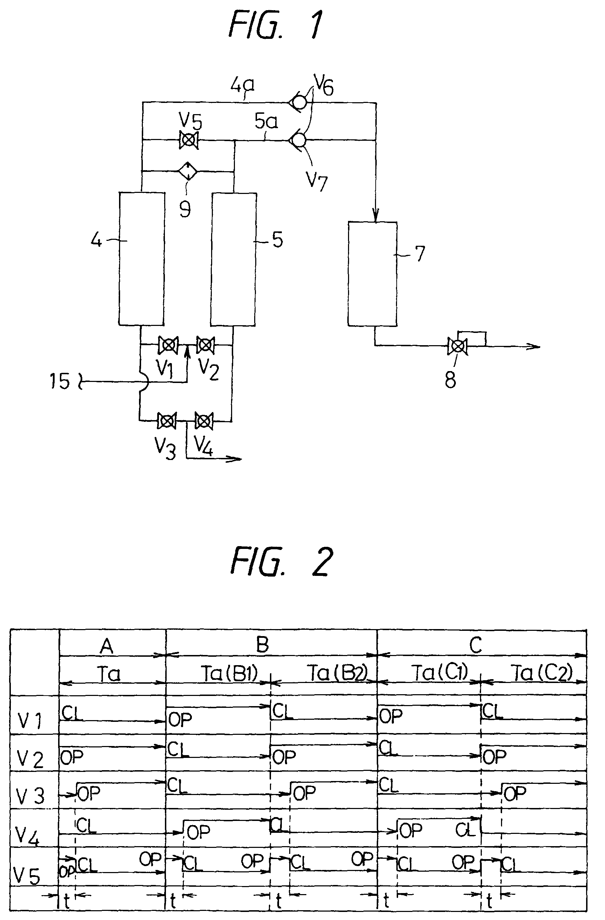

An outline of an apparatus which carries out the oxygen gas thickening method according to the present invention is shown in Fig. 1, wherein a reference numeral 15 represents a raw material (compressed air) supply source, reference numerals 4 and 5 designate first and second adsorption towers in which an adsorbent is charged. Furthermore, a reference numeral 7 denotes a buffer reservoir into which thickened gas is to be introduced. Furthermore, reference symbols V1, V2, V3, V4 and V5 represent valves respectively, and reference symbols V6 and V7 designate back-flow check valves. A reference numeral 9 denotes an orifice which functions to limit thickened oxygen gas which is supplied to desorb adsorbed nitrogen gas to a constant amount.

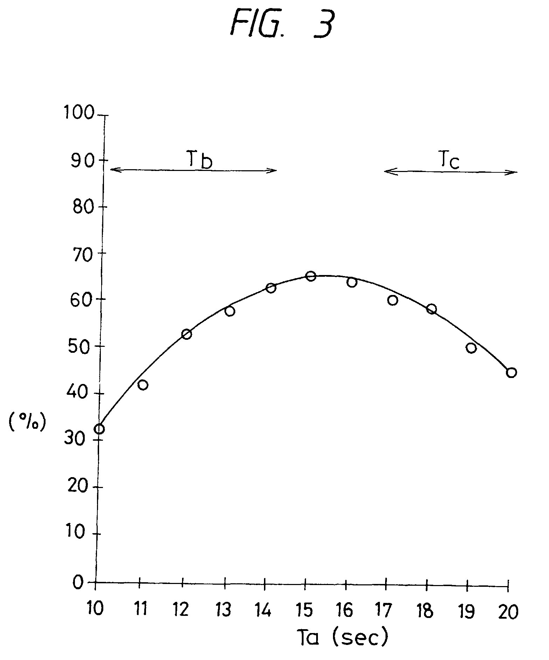

Fig. 2 shows a sequence of time cycles of the oxygen gas thickening method according to the present invention. In this drawing, reference symbols A, B and C a represent preceding cycle, a unit operation (first cycle) and a unit cycle (second cycle) respectively, reference symbols B1 and B2 designate desorption in the first desorption tower 4 at the first cycle and desorption in the second desorption tower 5 at the first cycle respectively, the reference symbols C1 and C2 denote desorption in the first desorption tower 2 at a second cycle and adsorption in the second adsorption tower 3 at the second cycle respectively, and a reference symbol Ta represents an operation time for the unit operation in each of the adsorption tower. That is, each of the preceding cycle (A), B1 and B2 at the first cycle, and C1 and C2 at the second cycle has an operation time of Ta. Furthermore, upper arrows and lower arrows on V1 through V5 valve operation lines indicate open valves (OP) and closed valves (CL) respectively.

At the preceding cycle (A), the valve V1 is closed, the valve V2 is open, the valve V3 is open after it is closed for t second, the valve V4 is closed and the valve V5 is closed after it is open for t second as shown in Fig. 2. That is, the valve V1 is closed and the valve V2 is open at the preceding cycle (A), whereby compressed air is fed into the second adsorption tower 5 by way of the valve V2, and since the valves V3 and V4 are closed and the valve V5 is open for the 1 second, thickened oxygen gas accumulated in the fist adsorption tower 4 passes from the first adsorption tower 4 into the second adsorption tower 5, whereafter compressed air is successively adsorbed in the first adsorption tower 4. When t second elapses after start of the preceding cycle (A), the valve V3 is opened from its closed condition and the valve V5 is closed from its open condition, whereby a desorbing gas is exhausted from the first adsorbing tower 4 through the valve V3.

At the next first cycle (B), the valve V1 is opened from its closed condition, the valve V2 is closed from its open condition, the valve V3 is closed from its open condition, the valve V4 is kept closed and opened t second later, and the valve V5 is kept open and closed t second later for the period of B1 as shown in Fig. 2. By these valve operations, the compressed air is allowed to pass through the valve V1 and fed into the first adsorption tower 4 when the valve V1 is opened and the valve V2 is closed simultaneously. Since the valve V3 is closed, the valve V4 is opened from its closed condition t second later and the valve V5 is open for the t second, thickened oxygen gas accumulated in the second adsorption tower 5 passes through the valve V5 into the first adsorption tower 4, thereby being effectively recovered. The valve V4 is opened from its closed condition and the valve V5 is closed from its open condition t second after start of the cycle B1, whereby the first adsorption tower proceeds to an adsorbing operation and the second adsorption tower proceeds to a desorbing operation. Subsequently, compressed air is fed as a raw material into the first adsorption tower 4 to adsorb nitrogen gas with the adsorbent, whereby thickened oxygen gas is fed into the buffer reservoir 7 thorough a flow path 4a.

At B2 Ta second after the start of the first cycle (B), the valve V1 is closed from its open condition and the valve V2 is opened from its closed condition, whereby the supply of the compressed air is switched from the first adsorption tower 4 to the second adsorption tower 5. The valve V3 remains closed at this time. The valve V4 which was open is closed, whereby both the valves V3 and V4 are set in closed conditions. The valve V5 is opened and closed after lapse of t second. Accordingly, thickened oxygen gas accumulated in the first adsorption tower 4 passes through the valve V5 into the second adsorption tower 5 and is recovered effectively for t second.

The valve V3 is opened and the valve V5 is closed t second later, whereby the raw material compressed air is send into the second adsorption tower 5 and the first absorption tower 4 starts a desorbing operation.

The first cycle (B) terminates $2 \times$ Ta second later as described above.

Operation at the second cycle (C) are the same as those at the first cycle (B) as shown in Fig. 2.

By repeating these operations, the thickened oxygen gas is sent into the buffer reservoir 3.

The oxygen gas thickening method according to the present invention is carried out with the apparatus having the configuration shown in Fig. 1 and at the time cycles shown in Fig. 2, and is characterized in that the time Ta (second) is reserved longer than that of the conventional method. Therefore, the oxygen gas thickening method according to the present invention is characterized in that it sends the compressed air into one of the adsorption towers, for example the first adsorption tower, for a time even after an adsorbing power of the adsorbent is saturated in the adsorption tower, whereby nitrogen is scarcely adsorbed and the compressed air is sent from the first adsorption tower into the buffer reservoir 7 to dilute high concentration oxygen gas which has already been sent. Accordingly, the oxygen gas thickening method according to the present invention makes it unnecessary to use an air bypass circuit, valves or valve switching operations in the circuit as shown in Fig. 1.

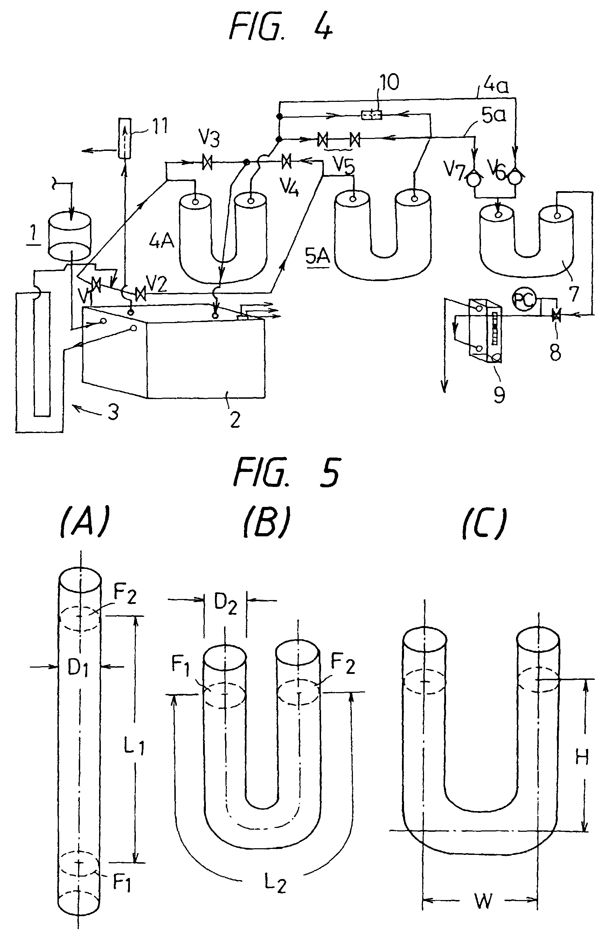

Fig. 3 is a diagram showing variations of a concentration of product oxygen gas versus the adsorbing operation time Ta (second), and a reference symbol Tb in Fig. 3 represents an area at which the adsorbent is regenerated insufficiently and a reference symbol Tc designates an area at which the adsorbing capability of the adsorbent is saturated.

A concentration of obtained oxygen gas is therefore determined by selection of the adsorbing operation time Ta. That is, prolonged Ta makes it possible to mix and dilute oxygen gas with raw material air free from adsorption obtained at the area Tc at which the adsorption capability of the adsorbent is saturated, and determine a mixing ratio of air from which nitrogen is not adsorbed dependently on a value of Tc, thereby obtaining oxygen gas at a correct concentration.

Now, description will be made of an embodiment of the oxygen thickening apparatus according to the present invention with reference to the accompanying drawings.

Fig. 4 is a diagram showing an example of configuration of the oxygen thickening apparatus according to the present invention, wherein a reference numeral 1 represents a compact filter which eliminates pollutant fine particles from air, a reference numeral 2 designates a closed box containing an air compressor, a reference numeral 3 denotes a cooling pipe for cooling compressed air, a reference numeral 4A represents a first U-shaped adsorption tower, a reference numeral 5A designates a second U-shaped adsorption tower, reference symbols V6 and V7 denote back-flow check valves, a reference numeral 7 represents a buffer reservoir, a reference numeral 8 designates a pressure control valve with a pressure gauge, a reference numeral 9 denotes an air flowmeter with a flow control valve, a reference numeral 10 represents a flow rate limiting orifice for supplying oxygen gas as a desorbent regenerating gas, a reference numeral 11 designates a desorbed gas exhaust silencer and reference symbols V1 through V5 denotes solenoid valves.

The oxygen thickening apparatus according to the present invention which has the configuration described above eliminates the pollutant fine particles from raw material air with the compact filter 1, compresses the raw material air into high-pressure air with the air compressor 2, cools the high-pressure air with the cooling pipe 3 and supplies the high-pressure air into the first adsorption tower 4A or the second adsorption tower 5A, which prepares high-concentration oxygen by adsorbing nitrogen with an adsorbent and sends the high-concentration oxygen into the buffer reservoir 7 by way of the flow paths 4a and 5a. While the first adsorption tower 4A is operating to adsorb nitrogen gas to enhance a concentration of oxygen by switching the valves V1 through V5 at the time cycles shown in Fig. 2, the second adsorption tower 5A desorbs and exhausts nitrogen gas from the absorbent. These operations are performed alternately by switching the solenoid valves.

The configuration shown in Fig. 4 of the oxygen gas thickening apparatus according to the present invention is fundamentally the same as that shown in Fig. 1 which is provided for description of the oxygen gas thickening method according to the present invention. Accordingly, the oxygen gas thickening apparatus according to the present invention shown in Fig. 4 provides thickened oxygen gas by switching the valves V1 through V5 on the basis of the time cycles shown in Fig. 2. Dependently on the selected time Ta, the oxygen gas thickening apparatus is capable of providing oxygen gas diluted to a desired concentration by utilizing air supplied when the adsorption capability of the adsorbent is saturated which has been described with reference to Fig. 3.

The oxygen gas thickening apparatus shown in Fig. 4 is configured not only to carry out the oxygen gas thickening method according to the present invention which is described with reference to Fig. 1 but also have following characteristic which are different from those of the conventional apparatus.

One of the characteristics lies in that the first and second adsorption towers have a form of a U pipe.

A second characteristic lies in that the air compressor is accommodated in a closed box and suspended in the air with a configuration peculiar to the present invention, thereby preventing noise from being made due to vibrations and the like.

Furthermore, exhausted desorbed gas is supplied into the closed box to suppress temperature rise as low as possible in the closed box, thereby lowering an operation cost of the air compressor.

In comparison with comparative examples, description will be made of components which concretely constitute the characteristics of the oxygen gas thickening apparatus according to the present invention and merits which are obtained with the characteristics.

First, the U-shaped adsorption tower which constitutes a characteristic of the present invention will be described in comparison with a cylindrical straight type adsorption tower.

Fig. 5 is a diagram showing forms of adsorption towers; (A) being a conventional example, whereas (B) and (C) being adsorption towers according to the present invention. In Fig. 5, a reference symbol F1 represents a suction side filter, a reference symbol F2 designates an exhaust side filter, reference symbols $L_1$ and $L_2$ designate lengths

charged layers: $L_1 = L_2$, and reference symbols $D_1$ and $D_2$ denote inside diameters of the adsorption towers: $D_1 = D_2$.

Table 1 shown below lists amounts of oxygen gas exhausted from the adsorption tower according to the present invention shown in (C) of Fig. 5 which has heights H and lengths L:

Table 1

|  | Experiment 1 | Experiment 2 | Experiment 3 | Experiment 4 |
|---|---|---|---|---|
| (1) | 25 cm | 22.5 cm | 20 cm | 17.5 cm |
| (2) | 10 cm | 15 cm | 20 cm | 25 cm |
| (3) | No gap in charged layer | No gas in charged layer | Slight gap in charged layer | Slight gap in charged layer |
| (4) | 92% by volume | 89% by volume | 38% by volume | 28% by volume |

In Table 1 shown above, line (1) lists a length L of a vertical section of the charged layer shown in (C) of Fig. 5, line (2) lists a length W of a curved bottom section of the charged layer, line (3) a visual observation result of the bottom section of the charged layer during operation and line (4) lists a measured value of an oxygen concentration of exhausted oxygen gas.

From the experimental results shown above, it will be understood that, when the length W of the curved section of the charged layer is prolonged with the length $L_2$ kept unchanged, or when the length H is shortened, a gap is formed in the bottom section of the charged layer and a larger amount of raw material air which is sent into the adsorption tower passes therethrough without being brought into contact with the adsorbent, whererby nitrogen is not adsorbed from a larger amount of the raw material air and a oxygen concentration is lowered.

Accordingly, it is desirable that a U-shaped adsorption tower which is to be used in the oxygen gas thickening apparatus according to the present invention has a value of W which is smaller than a predetermined value.

An experiment which was conducted to compare the apparatus according to the present invention with a conventional apparatus listed in Table 2 below provided results which are shown in Table 3.

Table 2

|  | Present invention | Conventional example |
|---|---|---|
| Type of adsorption tower | U-shaped pipe | Straight pipe |
| Inside diameter of adsorption tower | 55 mm | 55 mm |
| Charged amount of adsorbent | 1 kg $\times$ 2 | 1 kg $\times$ 2 |
| Pressure control valve for instrumentation compressed air source | 7 kg/cm$^2$ $\cdot$ G | 7 kg/cm$^2$ $\cdot$ G |
| Flow control valve for compressed air source | 40 nL/min average | 40 nL/min average |
| Pressure control valve for compressed air source | 3 kg/cm$^2$/cm$^2$ $\cdot$ G | 7 kg/cm$^2$ $\cdot$ G |
| Pressure control valve for exhaust oxygen gas | 0.9 kg/cm$^2$ $\cdot$ G | 0.9 kg/cm$^2$/cm$^2$ $\cdot$ G |
| Flow control valve for exhaust oxygen gas | 5 nL/min | 5 nL/min |
| Adsorbing operation time Ta | 15 seconds each | 15 second each |
| Oxygen gas recovery time t | 3 seconds each | 3 seconds each |
| Height of completed adsorption tower | 37 cm | 71 cm |

Table 3

| Variations of average compressed air flow rate from source | | |
|---|---|---|
| Time elapsed after experiment start | Present invention | Conventional example |
| 0 h | 40 L/m | 40 L/m |
| 100 h | 40 L/m | 40 L/m |
| 500 h | 40 L/m | 38 L/m |
| 1000 h | 40 L/m | 36 L/m |
| 2000 h | 30 L/m | 34 L/m |
| 2500 h | 39 L/m | 30 L/m |
| 3000 h | 39 L/m | 25 L/m |
| Variations of exhaust oxygen gas pressure | | |
| Time elapsed after experiment start | Present invention | Conventional example |
| 0h | 0.9 k | 0.9 k |
| 100 h | 0.9 k | 0.9 k |
| 500 h | 0.9 k | 0.85 k |
| 1000 h | 0.9 k | 0.84 k |
| 2000 h | 0.9k | 0.82 k |
| 2500 h | 0.85 k | 0.8 k |
| 3000 h | 0.83 k | 0.75k |
| Variations of exhaust oxygen gas concentration | | |
| Time elapsed after experiment start | Present invention | Conventional example |
| 0 h | 65% | 65% |
| 100 h | 65% | 65% |
| 500 h | 65% | 62% |
| 1000 h | 65% | 60% |
| 2000 h | 65% | 55% |
| 2500 h | 62% | 50% |
| 3000 h | 60% | 44% |

As apparent from Table 3 shown above, the oxygen gas thickening apparatus which uses the U-shaped adsorption towers according to the present invention is capable of providing oxygen gas stably for a time as long as 2000 hours.

On the other hand, the oxygen gas thickening apparatus which uses the conventional straight pipe type adsorption towers allows a pressure and a concentration of exhaust oxygen gas to be apparently dropped in 500 hours. Accordingly, this oxygen gas thickening apparatus may allow the pressure and concentration drops after 100 hours, thereby requiring maintenance.

The oxygen gas thickening apparatus according to the present invention is capable of providing oxygen gas stably for a time approximately 20 times as long as that the conventional apparatus as described above.

It is desirable to arrange the U-shaped adsorption towers so that the raw material feeding ports are disposed at upper locations in the oxygen gas thickening apparatus according to the present invention as shown in the drawing. When these ports are disposed downward in particular, the apparatus may be defective due to the filters and the similar members which are choked by the adsorbent like the oxygen gas thickening apparatus using the straight pipe type adsorption towers. It is therefore necessary to dispose the U-shaped adsorption towers so that the apparatus is free from the defect though slanted disposition of the adsorption towers poses no problem.

The buffer reservoir may be a straight pipe type.

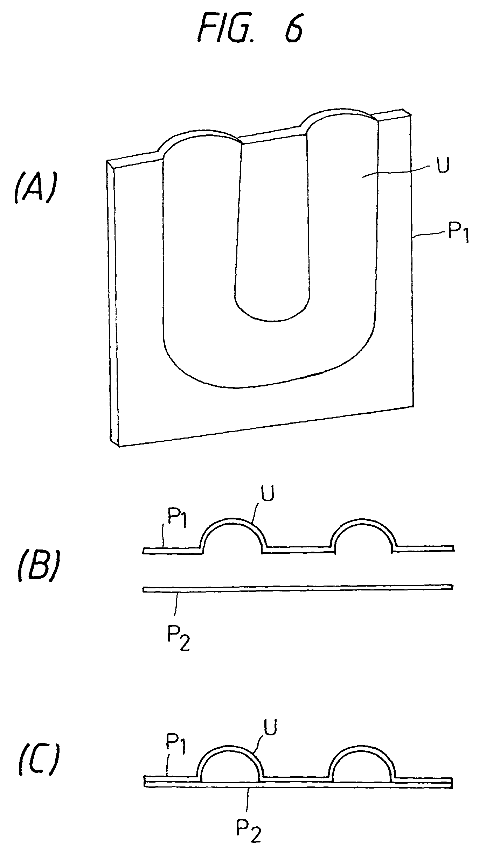

Though the adsorption towers used in the oxygen gas thickening apparatus according to the present invention have a circular or elliptic sectional shape, these towers may be those which have a semicircular or semielliptic sectional shape as shown in Fig. 6.

An adsorption tower which has such a semicircular or semielliptic sectional shape can be manufactured by press working a metal plate P1 so as to have a U shaped portion U as shown in (A) of Fig. 6 and cementing another plate P2 to the metal plate P1 in an airtight condition so as to form an adsorption tower which has a U-shaped sectional shape as that shown in (C) of Fig. 6. Accordingly, the U-shaped adsorption tower can be manufactured relatively easily.

Furthermore, a wall surface of a casing which accommodates the oxygen gas thickening apparatus can be utilized as the plate P2. That is, the adsorption tower may be formed by fixing the metal plate P1 directly to an inside surface of a wall which composes the casing. In this case, the adsorption tower can be manufactured more easily since the plate P1 having the U-shaped portion is fixed directly to the casing, thereby making no means to support the adsorption tower. According, this adsorption tower has a simple structure composed of a reduced number of parts, thereby allowing the oxygen gas thickening apparatus to be assembled easier and manufactured at a remarkably lower cost.

Even when the adsorption tower cannot be attached to the wall surface of the casing due to arrangement of parts or connections in the oxygen gas thickening apparatus, an adsorption tower can be easily formed by erecting a plate corresponding to the plate P2 in the casing and fixing the plate P1 which has the U-shaped portion U to the plate disposed in place of the plate 2 so as to assure an airtight condition.

The U-shaped adsorption tower which has the semicurcular sectional shape is more advantageous in its disposition and support than the U-shaped adsorption lower which has the circular sectional shape. The adsorption tower which has the semielliptic sectional shape can be manufactured in similar procedures and provides similar merits.

Now, description will be made of a concrete example of arrangement of the air compressor which constitutes a characteristic of the oxygen gas thickening apparatus according to the present invention.

Fig. 7 is a diagram showing a configuration of the air compressor enclosed in the closed box of the oxygen thickening apparatus according to the present invention. In Fig. 7, a reference numeral 51 represents a closed box made of sealing boards which are composed of laminated wood plates 15 mm thick and lead sheets 2 mm thick bonded to entire inside wall surfaces with elastic heat resisting adhesive sheets 1 mm thick, a reference numeral 52 designates a piston compression type air compressor, a reference numeral 53 denotes an electric motor, a reference numeral 54 represents a suction nozzle of the air compressor, a reference numeral 55 designates an air inlet pipe, a reference numeral 56 denotes an air suction port of the compressor, a reference numeral 57 represents a discharge nozzle, a reference numeral 58 designates a compressed air outlet pipe composed of a heat resisting nylon tube, a reference numeral 59 denotes a compressed air discharge port, a reference numeral 60 represents a port to introduce desorbed gas from the adsorption tower to cool an interior of the closed box, a reference numeral 61 designates a cooling gas exhaust pipe, a reference numeral 62 denotes an outlet port for cooling gas exhausted from the closed box, a reference numeral 63 represents a stand on which the air compressor 52 is fixed with a fixing member 64, a reference numeral 65 designates a spring which supports the stand 63 and a reference numeral 66 denotes terminals for the electric motor.

The air compressor 52 and the motor 53 for driving the air compressor which are used in the oxygen gas thickening apparatus according to the present invention are fixed to the fixing stand 63 supported by the spring 65 in the closed box 51, whereby vibrations during an operation of the air compressor are absorbed nearly completely by the spring 65 and noise is scarcely transmitted outside the closed box.

Furthermore, the vibration absorbing effect can be enhanced to prevent noise nearly completely by suspending the closed box 51 proper with a cord like member from a ceiling of the casing of the oxygen gas thickening apparatus in which the adsorption towers, the buffer reservoir, etc. are disposed.

Furthermore, the cooling gas exhaust pipe 61 is disposed in the closed box 51 which accommodates the air compressor used in the oxygen gas thickening apparatus according to the present invention so that a gas exhausted from the exhaust pipe 61 prevents an internal temperature of the closed box 51 from being raised. Since the exhaust desorbed gas which is generally to be discharged outside is exhausted once into the closed box 51 for cooling its interior as shown Fig. 4 and then is discharged outside the closed box 51, the oxygen gas thickening apparatus is capable of cooling the interior of the closed box, or the air compressor, without using a cooling device which is separately disposed.

Accordingly, the oxygen gas thickening apparatus according to the present invention is, as compared with an oxygen gas thickening apparatus which does not cool an air compressor, capable of more effectively preventing the air compressor from being troubled by seizure which is caused due to extreme temperature rise while the air compressor is operating.

Though it is required for the oxygen gas thickening apparatus according to the present invention to select an air compressor which is capable of operating at high temperatures or specified for heat resistance, it is sufficient to select, for example, an air compressor which is used around an automobile engine.

Industrial Applicable Possibility

The oxygen gas thickening method according to the present invention makes it unnecessary to use a diluting auxiliary circuit, thereby making it possible to simplify a configuration of an oxygen gas thickening apparatus. Furthermore, the oxygen gas thickening method according to the present invention makes it possible to obtain oxygen gas at a desired concentration with simple valve switching operations.

Moreover, the oxygen gas thickening apparatus according to the present invention which uses the U-shaped adsorption towers requires no maintenance after a short term use, thereby being usable continuously for a long time and facilitating maintenance. In addition, the oxygen gas thickening apparatus according to the present invention uses the air compressor accommodated in the closed box to suppress emission of noise and more or less cools the interior of the closed box to prevent extreme temperature rise in the closed box, thereby being compatible with a generally available air compressor specified for heat resistance.

**Claims**

1. An oxygen gas thickening method using a PSA system which supplied high-pressure air alternately to two adsorption towers, and repeating adsorption and desorption of nitrogen gas to and from an adsorbent in the adsorption towers, thereby thickening oxygen gas, characterized in that a time to feed raw material air into each adsorption tower is prolonged so that air is supplied even after an adsorption capability is saturated, thereby diluting a thickened gas to a predetermined concentration and providing oxygen gas at a desired concentration.

2. An oxygen gas thickening apparatus comprising: two adsorption towers in each of which an adsorbent is charged; a supply source which supplies compressed air into said two adsorption towers; a supply path which supplies raw material air from said supply source to said two adsorption towers by way of valves; a gas exhaust path which exhausts desorbed gas from said two adsorption towers by way of valves; and a supply path which supplies thickened gas from said two adsorption towers, characterized in that said two adsorption towers are U-shaped, and raw material supply ports, gas exhaust ports of the adsorption towers, and said thickened gas supply port are disposed at high locations.

3. The oxygen gas thickening apparatus according to claim 2, characterized in that said adsorption tower has a circular, semicircular, elliptic or semielliptic sectional shape.

4. The oxygen gas thickening apparatus according to claim 2, characterized in that an air compressor used as said supply source of compressed air is fixed to a support stand which is supported with a spring disposed in a tightly closed box.

5. The oxygen gas thickening apparatus according to claim 4, characterized in that said exhaust path is connected to said closed box, whereby the desorbed gas is exhausted after it is fed into said closed box.

# FIG. 1

4a
V6
V5  5a
V7
9
4  5
7
V1  V2
15
V3  V4
8

# FIG. 2

| | | A | | B | | | C | |
|---|---|---|---|---|---|---|---|---|
| | | Ta | | Ta(B1) | | Ta(B2) | Ta(C1) | Ta(C2) |
| V1 | | CL | | OP | CL | | OP | CL |
| V2 | | OP | | CL | | OP | CL | OP |
| V3 | | OP | | CL | | OP | CL | OP |
| V4 | | CL | | OP | CL | | OP | CL |
| V5 | OP CL | | OP | CL | OP | CL | OP CL | OP CL |
| | | t | t | | t | | t | t |

# FIG. 3

## FIG. 4

## FIG. 5

### (A)     (B)     (C)

# FIG. 6

(A)

(B)

(C)

## FIG. 7

## FIG. 8

# INTERNATIONAL SEARCH REPORT

| International application No. |
| --- |
| PCT/JP99/00607 |

**A. CLASSIFICATION OF SUBJECT MATTER**
Int.Cl$^6$ C01B13/02, B01D53/04

According to International Patent Classification (IPC) or to both national classification and IPC

**B. FIELDS SEARCHED**

Minimum documentation searched (classification system followed by classification symbols)
Int.Cl$^6$ C01B13/02, B01D53/04

Documentation searched other than minimum documentation to the extent that such documents are included in the fields searched
| | | | |
| --- | --- | --- | --- |
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A X Y | JP, 60-49127, U (Hitachi Chemical Co., Ltd.), 6 April, 1985 (06. 04. 85), Claims ; Figs. 1 to 3 (Family: none) | 1 2, 3 4, 5 |
| Y | JP, 63-242901, A (Teijin Ltd.), 7 October, 1988 (07. 10. 88), Claims ; page 2, upper right column, lines 10 to 15 (Family: none) | 4, 5 |
| Y | JP, 61-155204, A (Teijin Ltd.), 14 July, 1986 (14. 07. 86), Claims ; page 3, lower left column, lines 1 to 13 ; Fig. 2 & EP, 185980, A | 4, 5 |
| Y | JP, 61-48406, A (Teijin Ltd.), 10 March, 1986 (10. 03. 86), Claims ; page 4, upper left column, line 3 to upper right column, line 8 (Family: none) | 5 |

| [x] | Further documents are listed in the continuation of Box C. | [ ] | See patent family annex. |
| --- | --- | --- | --- |

| | | |
| --- | --- | --- |
| * "A" "E" "L" "O" "P" | Special categories of cited documents: document defining the general state of the art which is not considered to be of particular relevance earlier document but published on or after the international filing date document which may throw doubts on priority claim(s) or which is cited to establish the publication date of another citation or other special reason (as specified) document referring to an oral disclosure, use, exhibition or other means document published prior to the international filing date but later than the priority date claimed | "T" "X" "Y" "&" | later document published after the international filing date or priority date and not in conflict with the application but cited to understand the principle or theory underlying the invention document of particular relevance; the claimed invention cannot be considered novel or cannot be considered to involve an inventive step when the document is taken alone document of particular relevance; the claimed invention cannot be considered to involve an inventive step when the document is combined with one or more other such documents, such combination being obvious to a person skilled in the art document member of the same patent family |

| Date of the actual completion of the international search 26 April, 1999 (26. 04. 99) | Date of mailing of the international search report 11 May, 1999 (11. 05. 99) |
| --- | --- |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.

PCT/JP99/00607

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP, 3-7916, U (Nippon Enkon K.K.), 25 January, 1991 (25. 01. 91), Claims (Family: none) | 2 |

Form PCT/ISA/210 (continuation of second sheet) (July 1992)